# DEMANDE DE BREVET EUROPEEN

(11) **EP 1 278 006 A1**
(43) Date de publication de la demande: **22.01.2003**
(21) Numéro de dépôt: 01202779.3
(22) Date de dépôt: 19.07.2001
(51) Int. Cl.: F17C 13/12, F17C 13/04

(54) **Soupape de sûreté pour réservoirs de fluides sous pression**

(71) Demandeur: LUXEMBOURG PATENT COMPANY S.A., 1720 Luxembourg (LU)
(72) Inventeur: Kerger, Léon, 7382 Helmdange (LU)
(74) Mandataire: Meyers, Ernest

(57) **Abrégé**

La soupape est destinée à s'ouvrir à une température prédéterminée pour libérer le fluide sous pression hors du réservoir et son ouverture est déclenchée par la fusion d'une matière fusible. Elle comporte un corps en forme de douille (10) dont l'extrémité ouverte est exposée à la pression du gaz et dont le fond est fermé à l'exception d'un minuscule orifice (12). La paroi latérale du corps (10) comporte au moins une ouverture radiale (14) et le corps (10) est engagé, par son fond, par coulissement, dans un capuchon (16) de forme complémentaire et y est fixé à l'aide de la matière fusible (18). Le capuchon (16) comporte au moins un accès a l'atmosphère (20) et, après fusion de la matière fusible (18), est déplaçable par rapport au corps (10) jusqu'à ce que chaque accès (20) communique avec une ouverture latérale (14) du corps (10).

## Description

La présente invention concerne une soupape de sûreté pour un réservoir ou une conduite de fluide sous pression destinée à s'ouvrir à une température prédéterminée pour libérer le fluide sous pression et dont l'ouverture est déclenchée par la fusion d'une matière fusible.

De telles soupapes de sûreté sont utilisées pour éviter des risques d'explosion du réservoir lorsque la température dépasse une limite prédéterminée. En effet, à cette température, qui peut être de l'ordre de 100° C, la matière fusible, qui peut être un métal fusible, fond et permet l'échappement des gaz et les excès de pression. En dessous de cette température critique, le métal fusible doit normalement rester solide et empêcher toute fuite de pression et de gaz.

Malheureusement, on a constaté qu'il arrive que le métal fusible subit prématurément, c'est-à-dire à des températures inférieures à sa température de fusion, un fluage. On a constaté que ces cas se produisent lorsque le gaz est stocké à des pressions élevées et que l'origine de ce fluage est la combinaison de la température et de la pression. On a, en effet, trouvé que si un tel métal fusible est exposé pendant un temps relativement long à des pressions élevées, il peut se déformer et ainsi libérer les gaz en dessous de la température de fusion. Il y a donc une fuite non voulue avec des risques d'accident et des risques pour l'environnement. En outre, la matière du métal fusible à remplacer est excessivement chère.

Le document EP 1069355 décrit une telle soupape de sûreté qui comporte un bouchon en matière fusible destiné à fondre à une température prédéterminée pour libérer le gaz sous pression d'un réservoir. Le bouchon fusible est soumis à l'action d'un piston coulissant à action différentielle destiné à réduire au moins une partie de l'effet de la pression du gaz sur le bouchon fusible pour éviter que le bouchon ne fonde à une température inférieure à la température prédéterminée sous l'effet de la pression.

Le but de la présente invention est de prévoir une nouvelle soupape de sûreté que permet également de soustraire la matière fusible à la pression du gaz et qui nécessite une plus petite quantité de matière fusible que les soupapes connues.

Pour atteindre cet objectif, la présente invention propose une soupape du genre décrit dans le préambule, qui est caractérisée en ce qu'elle comporte un corps en forme de douille dont l'extrémité ouverte est exposée à la pression du gaz et dont le fond est fermé à l'exception d'un minuscule orifice, en ce que la paroi latérale du corps comporte au moins une ouverture radiale, en ce que le corps est engagé par son fond, par coulissement, dans un capuchon de forme complémentaire et y est fixé à l'aide de la matière fusible, en ce que ledit capuchon comporte au moins un accès à l'atmosphère, en ce que le capuchon, après fusion de la matière fusible, est axialement déplaçable par rapport au corps jusqu'à ce que chaque accès communique avec une ouverture latérale du corps.

Le capuchon comporte, de préférence, une butée qui limite le mouvement relatif entre le capuchon et le corps dans la position où les fenêtres sont libérées.

Ainsi, dans la position fermée de la soupape, lorsque le métal fusible est solide, celui-ci ne subit qu'une très petite force à travers l'orifice au fond de la douille. Cette force n'est pas en mesure d'altérer l'état physique du métal fusible. En revanche, lorsque le capuchon est exposé à une température dépassant le point de fusion du métal, celui-ci fond et libère le capuchon du corps. La pression du gaz qui s'exerce à travers l'orifice au fond de la douille est alors suffisante pour déplacer le capuchon par rapport au corps jusque dans la position d'alignement des ouvertures latérales et des fenêtres à travers lesquelles le gaz pourra s'échapper.

L'invention a par ailleurs l'avantage de ne nécessiter que très peu de métal fusible. Il suffit, en effet, de prévoir un mince film entre le fond du capuchon et le fond du corps pour y former une soudure et fixer ces deux éléments l'un à l'autre.

D'autres particularités de l'invention ressortiront de la description détaillée d'un mode de réalisation préféré présenté ci-dessous, à titre d'illustration, en référence aux dessins annexés dans lesquels :
- la figure 1 représente une coupe axiale à travers une soupape de sûreté en position fermée et
- la figure 2 représente une coupe axiale à travers la même soupape en position ouverte.

Comme on peut le voir sur les figures, la soupape comporte un corps 10 en forme de douille qui peut être pourvu d'un filetage extérieur pour être vissé dans la paroi d'un réservoir de gaz de manière à ce que son extrémité ouverte soit exposée à la pression du gaz. Le fonds du corps 10 est traversé axialement par un minuscule orifice 12, tandis ce qu'une ou plusieurs ouvertures 14 s'étendent radialement à travers la surface laterale du corps 10 dans la région du fond de celui-ci.

Le fond du corps 10 est engagé étroitement dans un capuchon 16 de forme complémentaire, cylindrique dans l'exemple représenté. Entre le fond du capuchon 16 et le fond du corps 10 se trouve un mince film de métal fusible 18, par exemple de l'étain à souder et qui assure, à l'état solide, la fixation du capuchon 16 sur le corps 10.

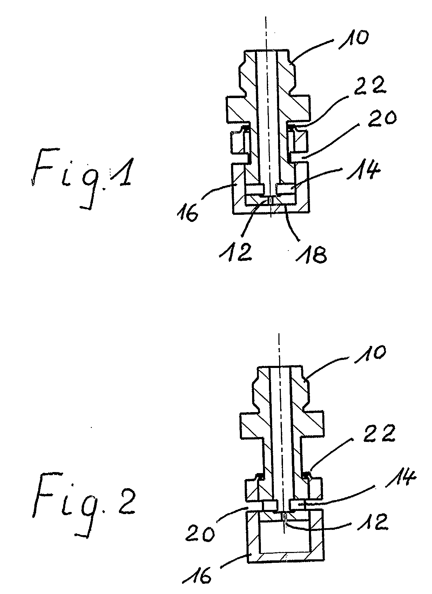

Le capuchon comporte, par ailleurs, une ou plusieurs fenêtres latérales 20 correspondant aux ouvertures 14 dans le corps 10 et permettant la détente des gaz lors de l'ouverture de la soupape. Le capuchon 16 comporte, par ailleurs, un bord rentrant 22 qui forme une buté lors du mouvement relatif entre le capuchon 16 et le corps 10 et qui fixe la position de la figure 2 dans laquelle les ouvertures latérales 14 du corps 10 et les fenêtres 20 du capuchon 16 sont en alignement mutuel.

Dans la position de fermeture de la figure 1 une faible force s'exerce seulement à travers l'orifice 12 sur le métal fusible vu que cet orifice 12 est exposé à la pression des gaz. Cette force n'est toutefois pas suffisante pour altérer l'état physique du métal fusible et pour défaire la fixation entre le corps 10 et le capuchon 16. Il existe, par conséquent, une étanchéité entre ces deux éléments si bien que les gaz ne peuvent pas s'échapper.

En revanche, lorsque, suite à une température excessive, le métal fusible fond et le capuchon est libéré de sa fixation avec le corps 10, la pression à travers l'orifice 12 devient suffisante pour engendrer un mouvement axial relatif entre le corps 10 et le capuchon 16 jusque dans la position de la figure 2 dans laquelle le gaz peut s'échapper et se détendre à travers les ouvertures radiales 14 et les fenêtres 14.

De nombreuses modifications sont possibles ou imaginables sans sortir du cadre de l'invention. Ainsi, par exemple, le corps 10, au lieu d'avoir un filetage pour être vissé sur un réservoir ou une conduite, peut faire partie intégrante de la paroi d'un réservoir ou d'une conduite.

Quant aux fenêtres latérales 20 dans le capuchon 16, elles peuvent être remplacées par tour autre moyen communiquant avec l'atmosphère, par exemple une rainure dans la paroi intérieure s'étendant jusqu'au bord ouvert du capuchon.

## Revendications

1. Soupape de sûreté pour un réservoir ou une conduite d'un fluide sous pression destinée à s'ouvrir à une température prédéterminée pour libérer le fluide sous pression hors du réservoir et dont l'ouverture est déclenchée par la fusion d'une matière fusible, **caractérisée en ce qu'**elle comporte un corps en forme de douille (10) dont l'extrémité ouverte est exposée à la pression du gaz et dont le fond est fermé à l'exception d'un minuscule orifice (12), **en ce que** la paroi latérale du corps (10) comporte au moins une ouverture radiale (14), **en ce que** le corps (10) est engagé, par son fond, par coulissement, dans un capuchon (16) de forme complémentaire et y est fixé à l'aide de la matière fusible (18), **en ce que** ledit capuchon (16) comporte au moins un accès a l'atmosphère (20), **en ce que** le capuchon (16), après fusion de la matière fusible (18), est déplaçable par rapport au corps (10) jusqu'à ce que chaque accès (20) communique avec une ouverture latérale (14) du corps (10).

2. Soupape selon la revendication 1, **caractérisée en ce que** le capuchon (10) comporte une butée (22) qui limite le mouvement relatif entre le capuchon (16) et le corps (10) dans la position où lesdites ouvertures (14) sont libérées.

3. Soupape selon la revendication 1, caractérisée ce que, ledit accès à l'atmosphère est constitué par une ou plusieurs fenêtres latérales (20) traversant la paroi du capuchon (16).
